# NEUE EUROPÄISCHE PATENTSCHRIFT

(11) **EP 1 835 204 B2**
(45) Veröffentlichungstag und Bekanntmachung des Hinweises auf die Entscheidung über den Einspruch: **26.09.2012**
(45) Hinweis auf die Patenterteilung: 01.07.2009
(21) Anmeldenummer: 07003946.6
(22) Anmeldetag: 27.02.2007
(51) Int. Cl.: F16H 61/00, F16H 63/48

(54) **Verfahren zur Steuerung eines automatisierten Doppelkupplungsgetriebes**
Method for controlling of an automated double clutch gearbox
Méthode de commande une boîte de vitesses à double embrayage automatisée

(30) Priorität: 17.03.2006 DE 102006012759
(43) Veröffentlichungstag der Anmeldung: 19.09.2007
(73) Patentinhaber: ZF Friedrichshafen AG, 88046 Friedrichshafen (DE)
(72) Erfinder: Schneider, Hans-Jürgen, 97440 Werneck-Stettbach (DE)

(56) Entgegenhaltungen:
- EP-A1- 0 691 486
- EP-A2- 1 332 934
- EP-B1- 1 403 571
- WO-A-02/055903
- WO-A1-01/29455
- WO-A2-03/095871
- DE-A1- 2 931 513
- DE-A1- 3 037 990
- DE-A1- 4 316 784
- DE-A1- 10 034 745
- DE-A1- 19 729 354
- DE-A1- 19 800 880
- DE-A1- 19 950 696

## Beschreibung

Die Erfindung betrifft ein Verfahren zur Steuerung eines automatisierten Doppelkupplungsgetriebe gemäß dem Oberbegriff des Patentanspruchs 1. Doppelkupplungsgetriebe sind seit längerem bekannt und werden bevorzugt in Kraftfahrzeugen eingesetzt. Ein Doppelkupplungsgetriebe weist im allgemeinen eine erste Getriebeeingangswelle, der eine erste Kupplung und Gangräder einer ersten Gruppe von Gängen zugeordnet sind, eine zweite Getriebeeingangswelle, der eine zweite Kupplung und Gangräder einer zweiten Gruppe von Gängen zugeordnet sind, und eine gemeinsame Getriebeabtriebswelle auf. Zumeist umfaßt die erste Gruppe von Gängen die ungeradzahligen Vorwärtsgänge sowie den Rückwärtsgang, die zweite Gruppe von Gängen die geradzahligen Vorwärtsgänge. In einem derart ausgebildeten Doppelkupplungsgetriebe besteht ein Schaltvorgang, d.h. ein Wechsel von einem wirksamen Lastgang in einen nächsthöheren oder nächstniedrigeren Zielgang zunächst in einem Einlegen des Zielganges, was z.B. über eine entsprechende Schaltmuffe und eine dem Zielgang zugeordnete Synchronisiervorrichtung erfolgen kann, und in einem anschließenden überschnittenen Trennen der der Getriebeeingangswelle des Lastganges zugeordneten Kupplung und Schließen der der Getriebeeingangswelle des Zielganges zugeordneten Kupplung, wobei eine Zugkraftunterbrechung weitgehend vermeidbar ist. Abgesehen von den Schaltvorgängen erfolgt die Kraftübertragung jeweils wechselweise über die erste oder die zweite Getriebeeingangswelle. Zur Anpassung an bestimmte Einsatzbedingungen und zur Realisierung von Zusatzfunktionen sind Variationen bzw, Weiterbildungen des Doppelkupplungsgetriebes entwickelt worden. So ist beispielsweise aus der DE 35 46 454 A1 ein Doppelkupplungsgetriebe bekannt, bei dem die beiden Getriebeeingangswellen durch eine zusätzliche Kupplung verbindbar sind. Dadurch sind insbesondere für einen Anfahrvorgang beide Kupplungen nutzbar, wodurch die verfügbare Kupplungskapazität erhöht und die thermische Belastung der Kupplungen verringert werden kann. Eine weitere Nutzung der zusätzlichen Kupplung, beispielsweise für eine Parksperre, ist nicht möglich.
In der gattungsbildenden DE 43 16 784 A1 wird ein Doppelkupplungsgetriebe beschrieben, das für ein Fahrzeug mit Elektroantrieb vorgesehen ist und nur zwei Gänge aufweist. Die Gangräder der beiden Gänge sind jeweils fest mit einer der Getriebeeingangswellen und der gemeinsamen Getriebeabtriebswelle verbunden. Ein Gangwechsel erfolgt daher ausschließlich über die beiden zugeordneten Kupplungen. Zur Realisierung einer Parksperre und einer sogenannten Bergstütze sind beide Kupplungen gleichzeitig schließbar ausgebildet. Eine derartige Ausbildung einer Parksperre ist jedoch bei Doppelkupplungsgetrieben, die in modernen Kraftfahrzeugen üblich sind und aktiv schließbare Kupplungen sowie jeweils mehrere Gänge pro Getriebeeingangswelle aufweisen, nicht anwendbar. Im Stand derTechnik ist auch ein gattungsbildendes Doppelkupplungsgetriebe bekannt (EP 0 691 486 A1), daß zwei Getriebeeingangswellen aufweist, wobei einer der Getriebeeingangswellen mehrere Gänge zugeordnet sind. In einem bestimmten Schaltungszustand dieses Doppelkupplungsgetriebes verhindert nur der Motor das Drehen der Fahrzeugräder, was nicht als Realisierung einer "richtigen Parksperre" zu bezeichnen ist. Weiterhin ist aus dem Stand der Technik ein Wechselgetriebe mit einer Getriebeeingangswelle bekannt (DE 198 00 880 A1), daß eine Schaltvorrichtung aufweist, wobei hier zur Erzeugung einer Parksperre zwei Gänge gleichzeitig eingelegt werden, Das Lösen der Parksperre bei einer größeren Verspannung der gleichzeitig eingelegten Gänge ist bei diesem Getriebe jedoch problematisch. Weiterhin ist aus der EP 1 226 376 A1 ein Doppelkupplungsgetriebe bekannt, welches zur sicheren Realisierung der Parksperre vorsieht, das Doppelkupplungstreiebe dergestalt auszubilden, dass der einen Getriebeeingangswelle die beiden Anfahrgänge (R und 1) zugeordnet sind und eine Parksperre dadurch realisiert wird, dass zwei der anderen Getriebeeingangswelle zugeordnete Gangstufen gleichzeitig eingelegt werden. Ist das Getriebe beim Lösen der Parksperre verspannt, kann durch beaufschlagen der anderen Kupplung und eines der beiden Anfahrgänge der verspannte Getriebezweig entspannt werden und die die Parksperre bildenden Gaangstufen ausgelegt werden. Die Anordnung der Gangstufen, beide Anfahrgänge sind einer Getriebeeingangswelle zugeordnet, ist zum sicheren Lösen der Parksperre zwingend vorgegeben.

Aus der WO 03/095871 A2 ist bereits ein Verfahren zur Steuerung eines automatisierten Doppelkupplungsgetriebes für ein Kraftfahrzeugs, bekannt, mit einer einer ersten Kupplungsanordnung zugeordneten ersten Getriebeeingangswelle und einer einer zweiten Kupplungsanordnung zugeordneten zweiten Getriebeeingangswelle und einer gemeinsamen Getriebeausgangswelle, wobei die beiden Kupplungsanordnungen mittels elektromechanischen Kupplungsaktuatoren betätigt werden, wobei jeder Getriebeeingangswelle eine Mehrzahl von Gangstufen zugeordnet ist, wobei mittels einer dafür vorgesehenen Aktuatorik die Getriebeeingangswellen unabhängig voneinander über eine auswählbare Gangstufe mit der Getriebeausgangswelle drehverkoppelt werden können, wobei die Aktuatorik zwei unabhängig voneinander betätigbare Teilaktuatoren aufweist, wobei jeder der beiden Kupplungsanordnungen ein elektrischer Kupplungsaktuator zugeordnet ist, wobei die beiden Kupptungsaktuatoren unabhängig voneinander betätigt werden können und dass in einer Parksperrenfunktion jeweils eine Gangstufe jeder Getriebeeingangswelle eingelegt wird.

Ausgehend von diesem Stand der Technik ist es Aufgabe der Erfindung, ein vorteilhaftes Verfahren zur Steuerung eines automatisierten Doppelkupplungsgetriebes zum Bereitstellen einer Parksperrenfunktion zu realisieren.

Zur Lösung dieser Aufgabe schlägt die Erfindung ein Verfahren nach Anspruch 1vor. Vorteilhaft, hierbei ist, dass die beiden Kupplungsanordnungen mittels elektromechanischen Kupplungsaktuatoren betätigt werden. Hierdurch können die beiden Kupplungsanordnungen unabhängig von einem Betriebszustand des Antriebsmotors des Kraftfahrzeuges betätigt werden, da Ihre Energie von einem Energiespeicher wie z.Bsp. einer Fahrzeugbatterie zur Verfügung gestellt wird. Eine weitere vorteilhafte Ausbildung der Erfindung schlägt vor, dass die Getriebeaktuatorik ebenfalls unabhängig von einem Betriebszustand des Antriebsmotors des Kraftfahrzeuges betätigt werden kann. Vorzugsweise ist hierbei die Getriebeaktuatorik ebenfalls elektromechanisch ausgebildet und weist höchstvorzugsweise zwei unabhängig voneinander betätigbare Teilaktuatoren auf, mittels denen die beiden Getriebeeingangswellen unabhängig voneinander über eine auswählbare Gangstufe mit der Getriebeausgangswelle drehverkoppelt werden können. Eine wesentliches Merkmal der Erfindung sieht vor, dass jeder der beiden Kupplungsanordnungen ein elektromechanischer Kupplungsaktuatoren zugeordnet ist, wobei die beiden Kupplungsanordnungen unabhängig betätigt werden können. Erfindungsgemäß sind die beiden Kupplungsanordnungen mit ihrem jeweiligem Kupplungsaktuator so ausgebildet, dass die Kupplungsanordnungen im unbestromten Zustand der Kupplungsaktuatoren geschlossen gehalten werden können. Dies ist zum einen dadurch zu realisieren, dass die Kupplungsanordnungen durch einen Kraftspeicher im geschlossenen Zustand gehalten werden, und durch Kraftbeaufschlagung durch den Aktuator geöffnet werden. In diesem Fall spricht man von sogenannten "normally closed"-Systemen. Mittlerweile werden jedoch in Doppelkupplungsgetriebe sogenannte "normally opened"-Systeme verwendet. Das bedeutet, das die Kupplungsanordnung durch Kraftbeaufschlagung durch den Aktuator geschlossen wird, also eine Einrückkraft aktiv aufzubringen ist. Um dennoch den Aktuator bei geschlossener Kupplung stromlos schalten zu könnnen, ist erfindungsgemäß vorgesehen, dass entweder ein Betätigungsmechaismus des Aktuators beim Schließen eine stabile Übertotpunktlage einnimmt und sich die Gegenkraft der Kupplungsanordnung an einem Anschlag abstützt, oder aber der Betätigungsmechanismus des Aktuators über einen Verriegelungsmechanismus verfügt, welcher den Aktuator blockieren kann. Alternativ kann auch vorgesehen sein, dass ein dem Betätigungsmechanismus des Aktuators zugeordnetes Getriebe selbsthemmend ausgebildet ist, wodurch der Aktuator die Kupplungsanordnung sicher geschlossen hält. Solche gattungsgemäßen Ausgestaltungen von Betätigungsmechanismen zum Betätigen von "normally opened"-Systemen sind bereits aus folgenden Anmeldungen der Anmelderin bekannt:
DE 1 004 440, DE 102 35 906, DE 197 55 081, EP 1 400 716.
Erfindungsgemäß wird in einer Parksperrenfunktion mittels der Getriebeaktuatoren jeweils eine Gangstufe eingelegt. Anschließend werden die beiden Kupplungsanordnungen mittels der Kupplungsaktuatoren geschlossen. Nach dem Gangeinlegen und Schließen der Kupplungsanordnungen werden die Kupplungsaktuatoren stromlos geschaltet. Vorteilhaft hierbei ist, dass die Gangstufen bei noch geöffneten Kupplungsanordnungen eingelegt werden, wodurch ein einfaches Gangeinlegen ermöglicht wird. Gegebenenfalls kann sich die Getriebeeingangswelle beim Gangeinlegen relativ zur Getriebeausgangswelle verdrehen um eine Kopplung der Getriebeeingangswellen mit der Getriebeausgangswelle mittels den Gangstufen zugeordneten Syncroneinrichtungen zu ermöglichen. Auch können sich die Getriebeeingangswellen bei geöffneten Kupplungseinrichtungen noch relativ zueinander verdrehen. Erst durch das' anschließende Schließen der Kupplungsanordnungen ist das Getriebe in sich blockiert, wodurch die Parksperrenfunktionalität darstellbar ist, ohne dass der stehende Motor als Bremse dienen muss. Die beiden Kupplungsanordnungen verfügen weiterhin erfindungsgemäß über eine gemeinsame Eingangsseite oder zumindest über miteinander gekoppelte Eingangsseiten, welche mit der Kurbelwelle des Antriebsmotors drehverkoppelt sind. Hierdurch ist folgendes, in sich drehverkoppeltes System dargestellt: Kupplungseindangsseite, Kupplungsausgangsseite der ersten Kupplung, welche der ersten Getriebeeingangswelle zugeordnet ist; über eine eingelegte Gangstufe der ersten Getriebeeingangswelle die Getriebeausgangswelle, über eine eingelegte Gangstufe der zweiten Getriebeeingangswelle die zweite Getriebeeingangswelle, bzw. Kupplungsausgangsseite der zweiten Kupplungsanordnung; und über die geschlossene zweite Kupplungsanordnung die gemeinsame Kupplungseingangfsseite. Dadurch dass die beiden eingelegten Gangstufen eine unterschiedliche Überstzung aufweisen, kann sich die Kupplungseingangsseite, bzw. die Getriebeausgangswelle nicht drehen. Vorzugsweise sind hierbei zwei aufeinanderfolgende Gangstufen oder/und alternativ ein oder zwei Anfahrgangstufen eingelegt. Vorteilhaft bei Verwendung von zumindest einer Anfahrgangstufe als Parksperrenstufe ist, dass beim Anfahren eines mit Parksperre blockierten abgestellten Fahrzeuges nach Lösen der Parksperre durch Öffnen der beiden Kupplungsariordnungen zum Anfahren des Fahrzeuges nicht erst die die Parksperre darstellende Gangstufe ausgelegt und eine Anfahrgangstufe eingelegt werden muss. Zum Anfahren muss lediglich die der gewünschten Anfahrgangstufe zugeordnete Kupplungsanordnung geschlossen werden, (wobei die andere Kupplungsanordnung natürlich geöffnet sein muss und/oder die andere Gangstufe ausgelegt sein muss).

Nach einem wesentlichen Aspekt der Erfindung ist vorgesehen, dass zum Einlegen einer Parksperre ein Wählhebel in eine dafür vorgesehene Stellung gebracht werden muss. Vorzugsweise kann mittels des Wählhebels eine von mehreren möglichen Stellungen angewählt werden, wobei mittels der einzelnen Wahlstellungen verschiedene Fahrzustände des Fahrzeugs eingestellt werden können. So ist erfindungsgemäß vorgesehen, dass zusätzlich zu der mit "P" gekennzeichneten Parkstellung eine Neutralstellung "N" vorgesehen ist, in welcher zumindest beide Kupplungsanordnungen geöffnet sind und/oder keine Gangstufen eingelegt sind, sowie eine Fahrstellung "D" oder "R" in welcher entweder eine Vorwärtsgangstufe("D") eingelegt ist und die zugeordnete Kupplungsanordnung geschlossen ist oder wird, oder eine Rückwärtsgangstufe("R") eingelegt ist und die' zugeordnete Kupplungsanordnung geschlossen ist oder wird.

Eine weiterführende Ausgestaltung des Verfahrens sieht vor, dass nach dem Verbringen des Wählhebels in eine Parksperrenposition mindestens ein Betriebsparameter des Kraftfahrzeugs ermittelt oder überprüft wird. Vorzugsweise wird als Parameter eine Fahr- oder Rollgeschwindigkeit des Fahrzeugs ermittelt und in Abhängigkeit der Fahr- oder Rollgeschwindigkeit durch das Schließen der beiden Kupplungsanordnungen das Fahrzeug gezielt bis zum Stillstand abgebremst wird. Hierbei nehmen die beiden Kupplungsausgangsseiten in Abhängigkeit der Gechwindigkeit und der eingelegten Gangstufen unterschiedlich hohe Relativgecshwiridigkeiten zueinander ein. Durch gleichzeitiges gezieltes Schließen der beiden Kupplungsanordnungen wird dann die aufzubringende Bremsenergie in beide Kupplungsanordnungen eingeleitet, bzw. wird bei Schließen erst der einen und dann der anderen Kupplungsanordnung die Bremsenergie von der später schließenden Kupplungsanordnung adsorbiert. Nach einem weiteren wesentlichen Aspekt der Erfindung wird als Betriebsparameter des Fahrzeugs ein Betriebszustand des Verbrennungsmotors ermittelt. Vorzugsweise wird ermittelt, ob sich der Motor dreht, bzw. ob eine Zündung des Motors eingeschaltetoder ausgeschaltet ist.
In Abhängigkeit des Betriebszustandes des Verbrennungsmotors ist vorgesehen, dass bei einem laufendem Antriebsmotor des Kraftfahrzeugs ein Bringen des Wählhebels in eine Parksperrenposition ein selbstständiges Abschalten des Antriebsmotors des Kraftfahrzeugs mittels einer Steuereinrichtung bewirkt. Anschließend werden dann wie vorstehend beschrieben zwei Gangstufen eingelegt und die Kupplungsanordnungen geschlossen. Alternativ kann auch vorgesehen sein dass bei einem laufendem Antriebsmotor kein Schließen der beiden Kupplungsanordnungen erfolgt. Ein anschließendes Abstellen des Antriebsmotors bei bereits angewählter Parksperrenposition des Wählhebels kann erfindungsgemäß ein Schließen der beiden Kupplungsanordnungen bewirken. Jedenfalls wird bei beiden Alternativen sichergestellt, dass kein undefiniertes Abwürgen des Fahrzeugmotors erfolgt.

Eine weiterführende Ausgestaltung des erfindungsgemäßen Verfahrens sieht vor, dass zum Starten eines Verbrennungsmotors eines in einer Parksperrenposition abgestellten Kraftfahrzeuges eine Betriebsbremse des Kraftfahrzeuges betätigt werden muss und dass bei betätigter Bremse des Kraftfahrzeuges die beiden Kupplungen geöffnet werden, bevor der Verbrennungsmotor gestartet wird. Vorteilhaft hierbei ist, dass dadurch gewährleistet wird, dass das Fahrzeug beim Startvorgang nicht wegrollen kann, da zum Starten des Motors dieser von der Getriebeausgangswelle abgekoppelt werden muss, was durch Öffnen der beiden Kupplungsanordnungen erfolgen kann. Weiterführend kann vorgesehen sein, dass ein Starten des Verbrennungsmotors durch Drücken oder Drehen eines Startknopfes oder Zündschlüssels bei nicht betätigter Betriebsbremse des Kraftfahrzeuges oder/und geschlossenen Kupplungsanordnungen von der Steuereinrichtung verhindert wird. Darüberhinaus kann vorteilhafterweise vorgesehen sein, dass bei nicht betätigter Betriebsbremse ein Verstellen des Wählhebels aus einer Parkstellung heraus mechanisch verhindert wird. Erfindungsgemäß bewirkt ein Verstellen des Wählhebels aus einer Parksperrenposition in eine zum Fahren vorgesehene Fahrposition, vorzugsweise Stellung "D" ein Öffnen einer der beiden Kupplungsanordnungen. Höchstvorzugsweise bewirkt ein ein Verstellen des Wählhebels aus einer Parksperrenposition in eine Neutralposition, vorzugsweise Stellung "N" ein Öffnen beider Kupplungsanordnungen, jedenfalls aber eine vollkommene Abkopplung des Fahrzeugmotors von der Getriebeausgangswelle. Vorteilhaft hierbei ist, dass somit in der Neutralstellung des Wählhebels ein Rollen, bzw. ein Abschleppen des Fahrzeugs ermöglicht wird.

Ein weiterer Aspekt der Erfindung sieht vor, dass bei einem mit einem Verbrennungsmotor und einem Elektromotor versehenen Hybridkraftfahrzeuges ein Verbringen des Wählhebels aus einer Parksperrenposition in eine zum Fahren vorgesehene Fahrposition ein gleichzeitiges Lösen einer der Kupplungsanordnungen und ein Anfahren mit dem Elektromotor über die andere Kupplungsanordnung bewirkt.
Üblicherweise ist der Antriebsstrang eines Hybridkraftfahrzeuges so aufgebaut, dass zwischen Verbrennungsmotor und Getriebe ein Elektromotor in einer Art Serienschaltung dazwischengeschaltet ist. Hierbei ist weiterhin vorgesehen, dass zwischen dem Verbrennungsmotor und dem Elektromotor eine Trennkupplung angeordnet ist, um den Verbrennungsmotor abzukoppeln, wenn elektromotorisch gefahren werden soll, bzw. um den Verbrennungsmotor an den Elektromotor anzukoppeln, wenn dieser mittels des Elektromotors gestartet werden soll. Wird mit dem Verbrennungsmotor, gefahren, dreht der Elektromotor dabei mit und kann in üblicher bekannter Weise generatorisch betrieben werden und zum Rekuperieren genutzt werden. Erfindungsgemäß kann ein Bringen des Wählhebels in eine Parksperrenposition ein selbstständiges Öffnen der Trennkupplung bewirken. Vorteilhaft hierbei ist, dass damit ein laufender Verbrennungsmotor vom Doppelkupplungsgetriebe abgekoppelt werden kann und somit vor dem Einlegen der beiden Gangstufen und Schließen der beiden Kupplungen nicht mehr abgeschaltet werden muss um ein Abwürgen zu verhindern. Vorzugsweise wird die Trennkupplung ebenfalls wie die beiden Kupplungsanordnungen der Doppelkupplungseinrichtung mittels eines elektromotorisch angetriebenen Aktuators betätigt.

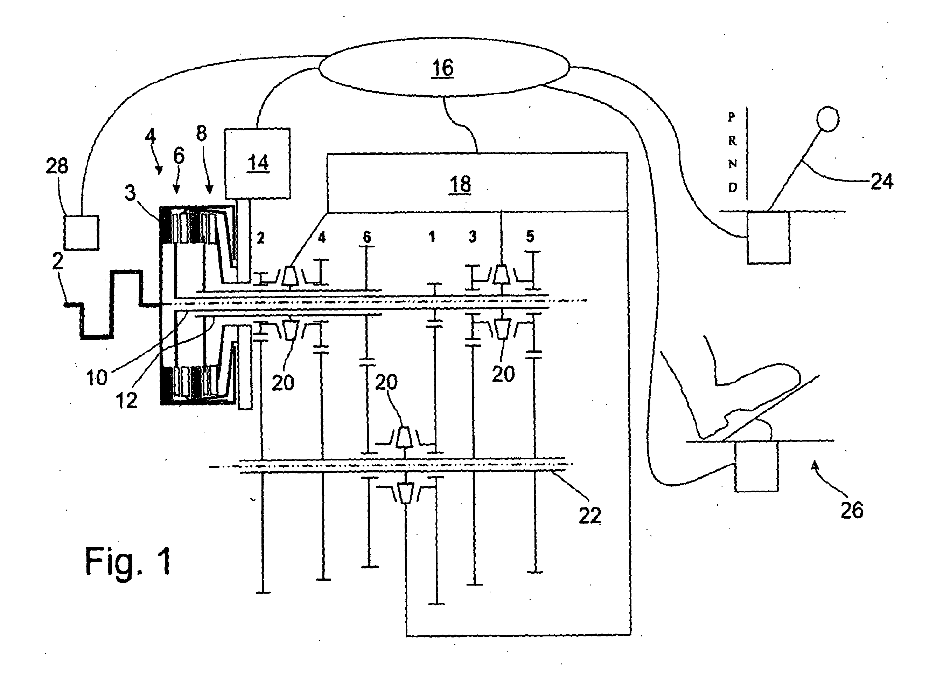

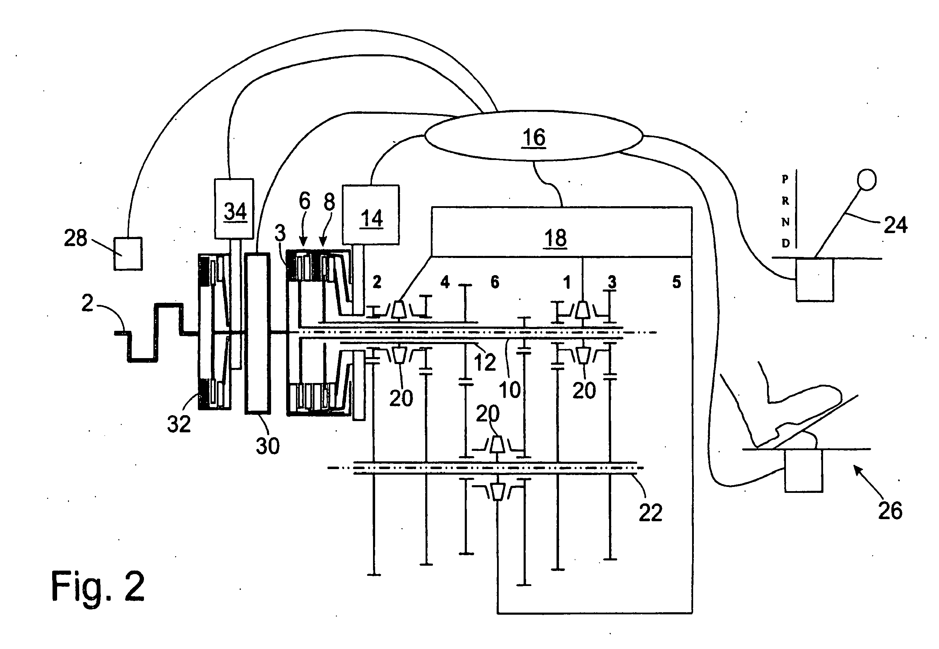

Im folgenden wird das erfindungsgemäße Verfahren anhand der Figuren 1 und 2 beschrieben. Hierbei zeigt
Figur 1 einen Antriebsstrang mit einem automatisierten Doppelkupplungsgetriebe
Figur 2 einen Antriebsstrang eines Haybridkraftfahrzeuges mit einem automatisierten Doppelkupplungsgetriebe

In Figur 1 treibt ein Verbrennungsmotor 2 eine Eingangsseite 3 einer Doppelkupplungseinrichtung 4 direkt oder unter Zwischenschaltung eines nicht dargestellten Torsionsschwingungsdämpfers an. Die Doppelkupplungseinrichtung 4 besteht im Wesentlichen aus den beiden Kupplungsanordnungen 6, 8, welche als trockene Kupplungsanordnungen ausgebildet sind. Die Kupplungsanordnung 6 ist hierbei einer ersten Getriebeeingangswelle 10 zugeordnet und die Kupplungsanordnung 8 ist hierbei einer zweiten Getriebeeingangswelle 12 eines Doppelkupplungsgetriebes zugeordnet. Die beiden Kupplungsanordnungen 6, 8 können mittels eines elektromechanischen Kupplungsaktuators 14, welcher von einer Steuereinheit 16 angesteuert wird, unabhängig voneinander betätigt werden.. Der inneren Getriebeeingangswelle 10sind die Gangstufen 1,3,5 zugeordnet und der äußeren Getriebeeingangswelle 12 sind die Gangstufen 2,4,6 zugeordnet. Eine Rückwärtsgangstufe ist in Fig. 1 nicht dargestellt. Mittels der Aktuatorik 18 können die Losräder der Gangstufen über zugeordnete Synchroneinheiten 20 mit den Getriebeeingangswellen 10, 12, bzw. mit der Getriebeausgangswelle 22 drehverkoppelt werden, wodurch die Gangstufen eingelegt sind und die Getriebeausgangswelle 22 über die eingelegte Gangstufe mit der der Gangstufe zugeordneten Getriebeeingangswelle drehverkoppelt ist. Weiterhin ist mit der Steuereinrichtung 16 ein Wählhebel 24, welcher in die Wählhebelstellungen P, R, N, D verschwenkbar ist, verbunden sowie eine fußkraftbetätigbare Betriebsbremse 26, sowie eine Motorsteuereinrichtung 28.

Wird der Wählhebel in die Parksperrenposition "P" verschwenkt wird mittels der Steuereinrichtung 16 oder der Motorsteuereinrichtung 28 festgestellt, ob der Verbrennungsmotor 2 läuft. Weiterhin wird mittels der Aktuatorik 18 jeweils eine Gangstufe jeder Getriebeeingangswelle 10, 12 bei geöffneten Kupplungsanordnungen 6, 8 eingelegt. Bei laufendem Motor 2 wird dieser automatisch mittels der Steuereinrichtung 16, 28 abgestellt und die beiden Kupplungsanordnungen 6, 8 mittels der Aktuatorik 14 geschlossen. Zum Lösen der Parksperre muss eine Betriebsbremse 26 betätigt werden, um ein Verschwenken des Wählhebels 24 zu ermöglichen. Wird der Wählhebel 24 aus der Parksperrenposition "P" heraus in eine der anderen Positionen "R", "N", "D" verschwenkt, wird zumindest eine der Kupplungsanordnungen 6, 8 mittels der Aktuatorik 14 geöffnet. Zum Anlassen des Verbrennungsmotors muss die Kupplungseingngsseite 3 von der Getriebeausgangswelle 22 entkoppelt werden, was durch Öffnen der beiden Kupplungsanordnungen 6, 8 mittels der Aktuatorik 14 erfolgen kann, oder/und durch Auslegen der eingelegten Gangstufen mittels der Aktuatorik 18.

Figur 2 zeigt im Wesentlichen denselben Antriebsstrang wie Figur 1, wobei zur Darstellung eines Antriebsstrang eines Hybridkraftfahrzeuges zwischen dem Verbrennungsmotor 2 und dem Doppelkupplungsgetriebe ein Elektromotor 30 angeordnet ist. Zwischen dem Elektromotor 30 und dem Verbrennungsmotor 2 ist eine Trennkupplung 32 angeordnet, welche über eine zugeordnete elektromechanische Aktuatorik 34 betätigt wird. Die Aktuatorik 34 und der Elektromotor sind jeweils mit der Steuereinrichtung 18 verbunden. Der Elektromotor ist mit der Eingangsseite 3 der Doppelkupplungseinrichtung verkoppelt. Ein Verschenken des Wählhebels 24 in die Parksperrenposition "P" bewirkt nun bei laufendem Verbrennungsmotor 2 ein Öffnen der Trennkupplung 32 mittels der Aktuatorik 34, wodurch der Verbrennungsmotor 2 von der Eingangsseite 3 der Doppelkupplungseinrichtung abgekoppelt wird und weiterlaufen kann. Anschließend wird in bekannter Weise jeweils eine Gangstufe der beiden Teilgetriebe eingelegt und die beiden Kupplungen 6, 8 geschlossen. Soll nun mittels des Elektromotors angefahren werden, muss bei betätigter Bremse 26 der Wählhebel 24 je nach Fahrtrichtungswunsch entweder nach "R" oder "D" verschwenkt werden. Anschließend wird mittels der Aktuatorik 14 mindestens eine der Kupplungsanordnungen 6, 8 geöffnet und mittels der Aktuatorik 18 die alte/alten Gangstufe/Gangstufen ausgelegt und der gewünschte Anfahrgang eingelegt. Ist im Getriebe bereits die gewünschte Anfahrgangstufe eingelegt, wird lediglich die nicht der Anfahrgangstufe zugeordnete Kupplungsanordnung 6, 8 geöffnet. Zeitgleich oder anschließend kann mittels des Elektromotors 30 ein Drehmoment auf die Kupplungseingsseite 3 ausgeübt werden und angefahren werden.

## Patentansprüche

1. Verfahren zur Steuerung eines automatisierten Doppelkupplungsgetriebes für ein Kraftfahrzeug, mit einer einer ersten Kupplungsanordnung (6) zugeordneten ersten Getriebeeingangswelle (10) und einer einer zweiten Kupplungsanordnung (8) zugeordneten zweiten Getriebeeingangswelle (12) und einer gemeinsamen Getriebeausgangswelle (22), wobei die beiden Kupplungsanordnungen mittels elektromechanischen Kupplungsaktuatoren betätigt werden, wobei jeder Getriebeeingangswelle eine Mehrzahl von Gangstufen (1-6) zugeordnet ist, wobei mittels einer dafür vorgesehenen Aktuatorik (18) die Getriebeeingangswellen unabhängig voneinander über eine auswählbare Gangstufe mit der Getriebeausgangswelle drehverkoppelt werden können, wobei die Aktuatorik zwei unabhängig voneinander betätigbare Teilaktuatoren aufweist, wobei
jeder der beiden Kupplungsanordnungen (6, 8) ein elektromechanischer Kupplungsaktuator (14) zugeordnet ist, wobei die beiden Kupplungsaktuatoren unabhängig voneinander betätigt werden können und dass in einer Parksperrenfunktion jeweils eine Gangstufe jeder Getriebeeingangswelle eingelegt wird und dass anschließend die beiden Kupplungsanordnungen geschlossen werden, wobei die Gangstufen bei noch geöffneten Kupplungsanordnungen eingelegt werden, und wobei zum Einlegen einer Parksperre ein Wählhebel (24) in eine dafür vorgesehene Stellung (P) gebracht werden muss und wobei weiterhin ein Verbringen des Wählhebels (24) aus einer Parksperrenposition (P) in eine zum Fahren vorgesehene Fahrposition (D, R) ein Öffnen einer der beiden Kupplungsanordnungen (6, 8) bewirkt.

2. Verfahren zur Steuerung eines automatisierten Doppelkupplungsgetriebes nach Anspruch 1,
**dadurch gekenzeichnet,**
dass nach dem Verbringen des Wählhebels in eine Parksperrenposition mindestens ein Betriebsparameter des Kraftfahrzeugs ermittelt oder überprüft wird.

3. Verfahren zur Steuerung eines automatisierten Doppelkupplungsgetriebes nach Anspruch 1 oder 2,
**dadurch gekenzeichnet,**
dass bei einem laufendem Antriebsmotor des Kraftfahrzeugs ein Bringen des Wählhebels in eine Parksperrenposition ein selbstständiges Abschalten des Antriebsmotors des Kraftfahrzeugs mittels einer Steuereinrichtung bewirkt.

4. Verfahren zur Steuerung eines automatisierten Doppelkupplungsgetriebes nach Anspruch 1,
**dadurch gekenzeichnet,**
dass in Abhängigkeit einer Fahrgeschwindigkeit oder Rollgeschwindigkeit des Fahrzeuges zumindest eine der beiden Kupplungsanordnung mit einer definierten Schließgeschwindigkeit oder Schließcharakteristik geschlossen wird.

5. Verfahren zur Steuerung eines automatisierten Doppelkupplungsgetriebes nach Anspruch 1,
**dadurch gekenzeichnet,**
dass bei einem mit einem Verbrennungsmotor und einem Elektromotor versehenen Hybridkraftfahrzeuges ein Verbringen des Wählhebels aus einer Parksperrenposition in eine zum Fahren vorgesehene Fahrposition ein gleichzeitiges Lösen einer der Kupplungsanordnungen und ein Anfahren mit dem Elektromotor über die andere Kupplungsanordnung bewirkt.

6. Verfahren zur Steuerung eines automatisierten Doppelkupplungsgetriebes nach Anspruch 1,
**dadurch gekenzeichnet,**
dass bei einem mit einem Verbrennungsmotor und einem Elektromotor versehenen Hybridkraftfahrzeug ein Verbringen des Wählhebels in eine Parksperrenposition ein Öffnen einer zwischen dem Verbrennungsmotor und dem Elektromotor angeordneten Trennkupplung bewirkt.

## Claims

1. Method for controlling an automated dual clutch transmission for a motor vehicle, having a first transmission input shaft (10) which is assigned to a first clutch arrangement (6) and a second transmission input shaft (12) which is assigned to a second clutch arrangement (8) and a common transmission output shaft (22), the two clutch arrangements being actuated by means of electromechanical clutch actuators, each transmission input shaft being assigned a plurality of gear stages (1-6), it being possible for the transmission input shafts to be rotatably coupled independently of one another, by means of an actuator system (18) which is provided for this purpose, to the transmission output shaft via a selectable gear stage, the actuator system having two part-actuators (20) which can be actuated independently of one another, each of the two clutch arrangements (6, 8) being assigned an electromechanical clutch actuator (14), it being possible for the two clutch actuators to be actuated independently of one another, and, in a parking lock function, in each case one gear stage of each transmission input shaft being engaged, and subsequently the two clutch arrangements being closed, the gear stages being engaged while the clutch arrangements are still open and, in order to engage a parking lock, a selector lever (24) having to be moved into a position (P) which is provided for this purpose and, in addition, moving the selector lever (24) out of a parking lock position (P) into a drive position (D, R) which is provided for driving bringing about opening of one of the two clutch arrangements (6, 8).

2. Method for controlling an automated dual clutch transmission according to Claim 1, **characterized in that**, after the selector lever has been moved into a parking lock position, at least one operating parameter of the motor vehicle is determined or checked.

3. Method for controlling an automated dual clutch transmission according to Claim 1 or 2, **characterized in that**, when the drive engine of the motor vehicle is running, moving the selector lever into a parking lock position brings about independent switching off of the drive engine of the motor vehicle by means of a control device.

4. Method for controlling an automated dual clutch transmission according to Claim 1, **characterized in that** at least one of the two clutch arrangements is closed at a defined closing speed or with a defined closing characteristic as a function of a driving speed or rolling speed of the vehicle.

5. Method for controlling an automated dual clutch transmission according to Claim 1, **characterized in that**, in the case of a hybrid motor vehicle which is provided with an internal combustion engine and an electric motor, moving the selector lever out of a parking lock position into a drive position which is provided for driving brings about simultaneous release of one of the clutch arrangements and driving off by way of the electric motor via the other clutch arrangement.

6. Method for controlling an automated dual clutch transmission according to Claim 1, **characterized in that**, in the case of a hybrid motor vehicle which is provided with an internal combustion engine and an electric motor, moving the selector lever into a parking lock position brings about opening of a separating clutch which is arranged between the internal combustion engine and the electric motor.

## Revendications

1. Procédé de commande d'une boîte de vitesses à double embrayage automatisée pour un véhicule automobile, comprenant un premier arbre d'entrée de boîte de vitesses (10) associé à un premier agencement d'embrayage (6) et un deuxième arbre d'entrée de boîte de vitesses (12) associé à un deuxième agencement d'embrayage (8) et un arbre de sortie de boîte de vitesses commun (22), les deux agencements d'embrayage étant actionnés au moyen d'actionneurs d'embrayage électromécaniques, chaque arbre d'entrée de boîte de vitesses étant associé à une pluralité de rapports de vitesses (1-6), les arbres d'entrée de boîte de vitesses pouvant être accouplés en rotation à l'arbre de sortie de boîte de vitesses indépendamment l'un de l'autre au moyen d'un système d'actionneurs (18) prévu à cet effet, par le biais d'un rapport de vitesse sélectionnable, le système d'actionneurs présentant deux actionneurs partiels (20) pouvant être actionnés indépendamment l'un de l'autre, chacun des deux agencements d'embrayages (6, 8) étant associé à un actionneur d'embrayage électromécanique (14), les deux actionneurs d'embrayage pouvant être actionnés indépendamment l'un de l'autre et, dans une fonction de verrouillage de stationnement, un rapport de vitesse de chaque arbre d'entrée de boîte de vitesses étant à chaque fois enclenché et les deux agencements d'embrayages étant ensuite fermés, les rapports de vitesse étant enclenchés alors que les agencements d'embrayages sont encore ouverts et pour l'enclenchement d'un verrouillage de stationnement, un levier de sélection (24) devant être amené dans une position (P) prévue à cet effet et en autre le fait d'amener le levier de sélection (24) d'une position de verrouillage de stationnement (P) dans une position de conduite (D, R) prévue pour la conduite, provoquant une ouverture d'un des deux agencements d'embrayages.

2. Procédé de commande d'une boîte de vitesses à double embrayage automatisée selon la revendication 1,
**caractérisé en ce**
**qu'**après que l'on a amené le levier de sélection dans une position de verrouillage de stationnement, au moins un paramètre de fonctionnement du véhicule automobile est détecté ou surveillé.

3. Procédé de commande d'une boîte de vitesses à double embrayage automatisée selon la revendication 1 ou 2,
**caractérisé en ce que**
dans le cas d'un moteur d'entraînement du véhicule automobile qui tourne, le fait d'amener le levier de sélection dans une position de verrouillage de stationnement provoque une déconnexion automatique du moteur d'entraînement du véhicule automobile au moyen d'un dispositif de commande.

4. Procédé de commande d'une boîte de vitesses à double embrayage automatisée selon la revendication 1,
**caractérisé en ce**
**qu'**en fonction d'une vitesse de conduite ou d'une vitesse de roulement du véhicule, au moins l'un des deux agencements d'embrayage est fermé avec une vitesse de fermeture ou une caractéristique de fermeture définie.

5. Procédé de commande d'une boîte de vitesses à double embrayage automatisée selon la revendication 1,
**caractérisé en ce que**
dans le cas d'un véhicule automobile hybride pourvu d'un moteur à combustion interne et d'un moteur électrique, le fait d'amener le levier de sélection d'une position de verrouillage de stationnement dans une position de conduite prévue pour la conduite provoque une libération simultanée de l'un des agencements d'embrayages et un démarrage avec le moteur électrique par le biais de l'autre agencement d'embrayage.

6. Procédé de commande d'une boîte de vitesses à double embrayage automatisée selon la revendication 1,
**caractérisé en ce que**
dans le cas d'un véhicule automobile hybride pourvu d'un moteur à combustion interne et d'un moteur électrique, le fait d'amener le levier de sélection dans une position de verrouillage de stationnement provoque une ouverture d'un embrayage de séparation disposé entre le moteur à combustion interne et le moteur électrique.
